# EUROPEAN PATENT SPECIFICATION

(11) **EP 4 385 706 B1**
(45) Date of publication and mention of the grant of the patent: **11.06.2025**
(21) Application number: 23214825.4
(22) Date of filing: 07.12.2023
(51) Int. Cl.: B29C 49/04, B29C 49/42, B29L 23/00, B29C 49/64

(54) **HOSE FORMING DEVICE AND MEHTOD OF FORMING HOSE**
SCHLAUCHFORMUNGSVORRICHTUNG UND VERFAHREN ZUR FORMUNG EINES SCHLAUCHES
DISPOSITIF DE FORMATION DE TUYAU ET PROCÉDÉ DE FORMATION DE TUYAU

(30) Priority: 15.12.2022 KR 20220175760
(43) Date of publication of application: 19.06.2024
(73) Proprietor: HS R & A Co., Ltd., Gyeongsanganam-do 50592 (KR)
(72) Inventor: KIM, Byeong Ju, Yangsan-si 50592 (KR); KIM, Guk Hyun, Yangsan-si 50592 (KR); JUN, Beom Jin, Yangsan-si 50592 (KR); LEE, Seung Hyo, Yangsan-si 50592 (KR)
(74) Representative: Tiburzi, Andrea

(56) References cited:
- GB-A- 935 560
- US-A1- 2016 040 806
- US-A1- 2016 207 247
- US-B1- 6 287 508

## Description

### TECHNICAL FIELD

Various embodiments of this document relate to a hose forming device and a method of forming a hose.

### BACKGROUND

In general, hoses are used as passageways for fluid movement in engines, pneumatic equipment, and hydraulic equipment used in automobiles, ships, or industrial facilities.

The hose may have to be produced in numerical values designed to ensure assembly and fastening with a counterpart.

The relevant prior art includes the patent application US6287508B1 and the patent application US20160207247A1. Patent application US6287508B1 describes a hose forming device for forming a heated hose, the hose forming device comprising: a first pipe, including a first body, a first conduit formed inside the first body and extended in the same direction as an extension direction of the first body, and a first jig connected to the first conduit and protruded from the first body to be inserted into an one end part of the hose; a second pipe including a second body, a second conduit formed inside the second body and extended in the same direction as an extension direction of the second body, and a second jig connected to the second conduit and protruded from the second body to be inserted into the other end part of the hose; and a fluid supply device connected to at least one of the first conduit of the first pipe or the second conduit of the second pipe to supply fluid to the hose.

### SUMMARY

Hoses used in engines, pneumatic equipment, and hydraulic equipment used in automobiles, ships, or industrial facilities may vary in form according to the purpose and conditions of use. The hose may be formed into a required shape through a heating step that changes a shape of the hose to be formed. After the heating step, the hose may maintain a formed shape through a cooling step.

The hose may contract in a cooling step, and accordingly, the hose may not be produced to a designed shape. In particular, as an inner diameter size of both ends of the hose fastened to the counterpart is not formed according to a designed numerical value, assembly or fastening with a counterpart may not be secured. To solve this problem, a process for processing the hose in which cooling is completed is added, which may increase a cost of forming the hose.

Various embodiments of this document provide a method capable of forming a hose in designed numerical values. Accordingly, the hose may secure assembly or fastening with a counterpart.

According to an embodiment of the disclosure, a hose forming device for forming a heated hose may include a first pipe including a first body, a first conduit formed inside the first body and extended in the same direction as an extension direction of the first body, and a first jig connected to the first conduit and protruded from the first body to be inserted into an one end part of the hose; a second pipe including a second body, a second conduit formed inside the second body and extended in the same direction as an extension direction of the second body, and a second jig connected to the second conduit and protruded from the second body to be inserted into the other end part of the hose; and a fluid supply device connected to at least one of the first conduit of the first pipe or the second conduit of the second pipe to supply fluid to the hose.

According to an embodiment of the disclosure, a method of forming a hose may include heating a material; forming a hose by injecting a heated material into a mold; inserting one end of the heated hose into a first jig connected to a first conduit formed inside a first body and inserting the other end of the heated hose into a second jig connected to a second conduit formed inside a second body; relatively moving the first body with respect to the second body through a moving device disposed in at least one of the first body or the second body; cooling the hose by controlling a fluid supply device connected to at least one of the first conduit or the second conduit; and separating the hose from the first jig and the second jig.

### BRIEF DESCRIPTION OF THE DRAWINGS

In relation to the description of the drawings, the same or similar reference numerals may be used for identical or similar components.
FIG. 1 is a flowchart illustrating a hose forming process according to an embodiment of this document.
FIG. 2A is a perspective view illustrating a hose forming device according to an embodiment of the disclosure.
FIG. 2B is an exploded perspective view illustrating a hose forming device according to an embodiment of the disclosure.
FIG. 3A is a perspective view illustrating a first pipe in which a first jig is formed according to an embodiment of the disclosure.
FIG. 3B is a perspective view illustrating a second pipe and third pipe in which a second jig is formed according to an embodiment of the disclosure.
FIG. 4 is a diagram illustrating a hose according to an embodiment of the disclosure.

### DETAILED DESCRIPTION

In the following description, various embodiments of this document are described with reference to the accompanying drawings. Various embodiments of this document and terms used herein are not intended to limit the technical features described in this document to specific embodiments, and should be understood to include various changes, equivalents, or replacements of the embodiments.

In connection with the description of the drawings, similar reference numbers may be used for similar or related components.

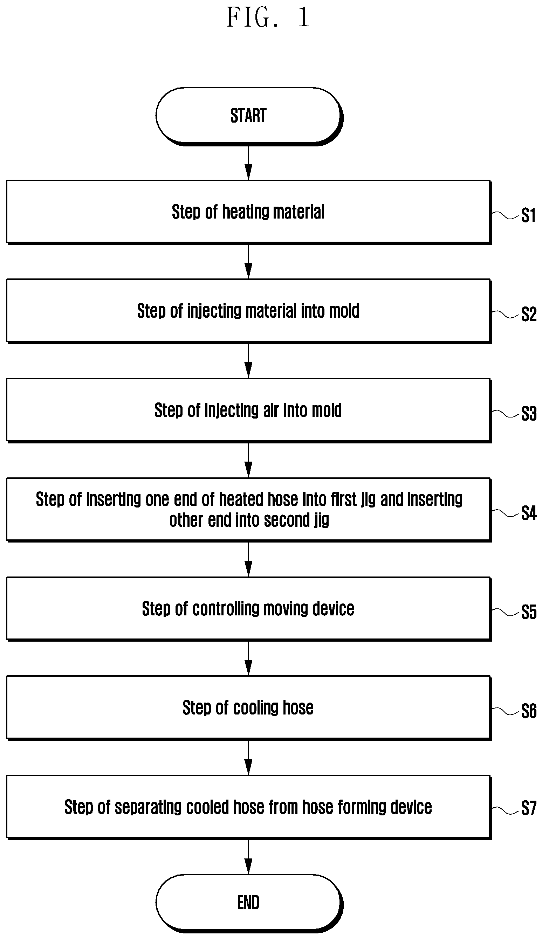

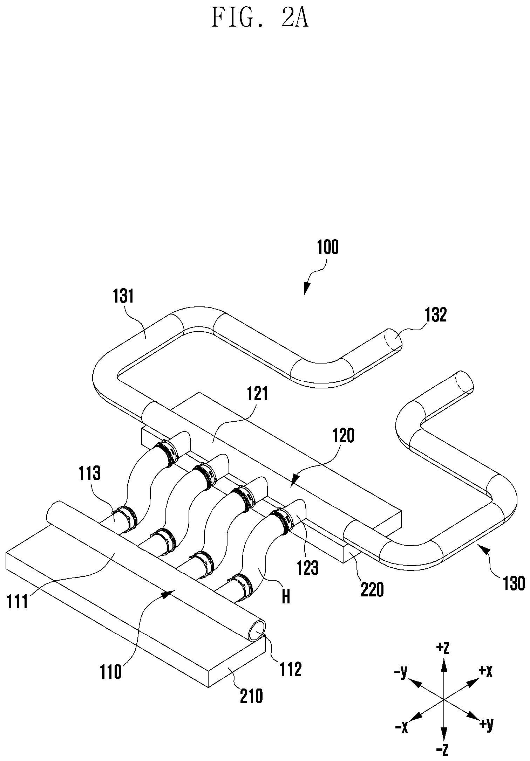

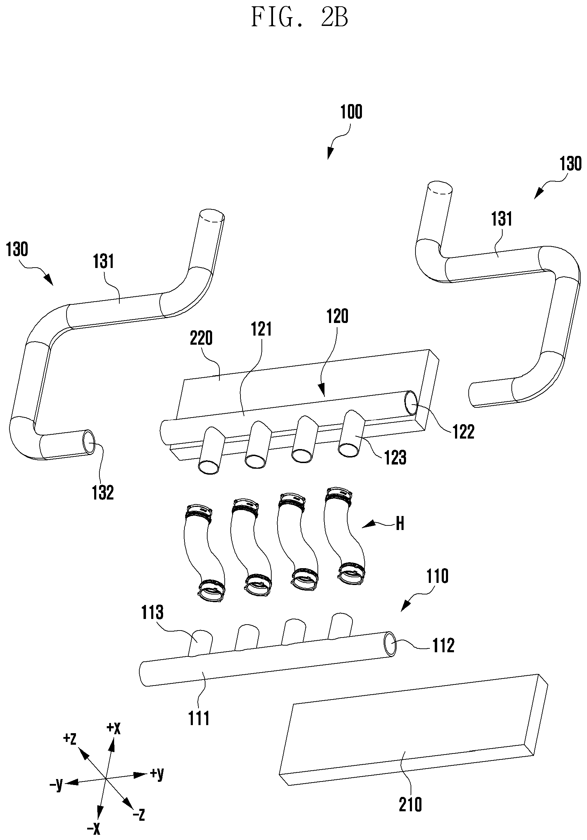

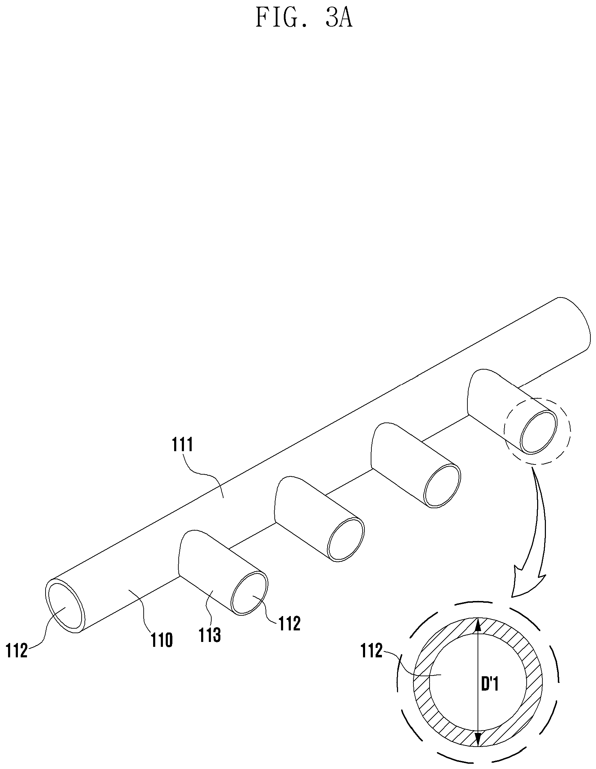

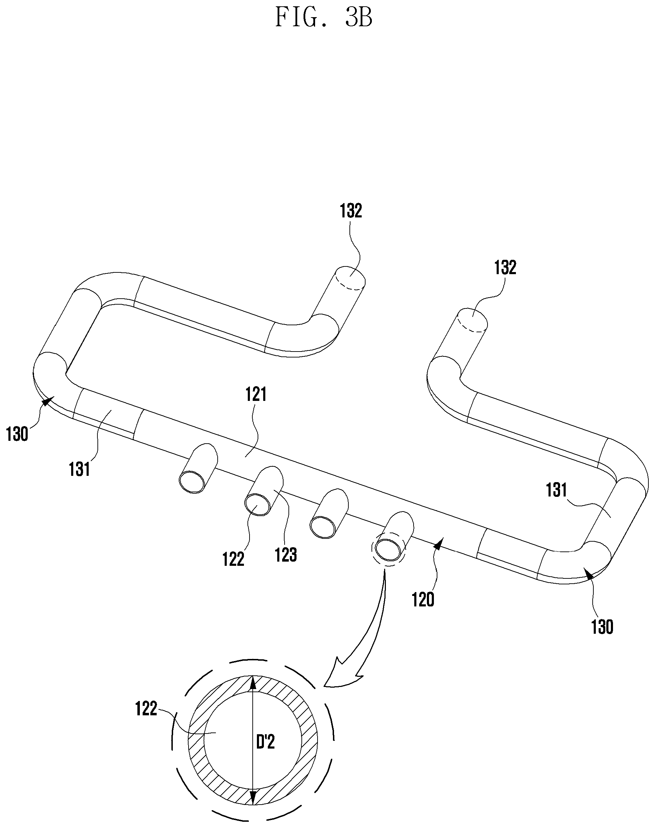

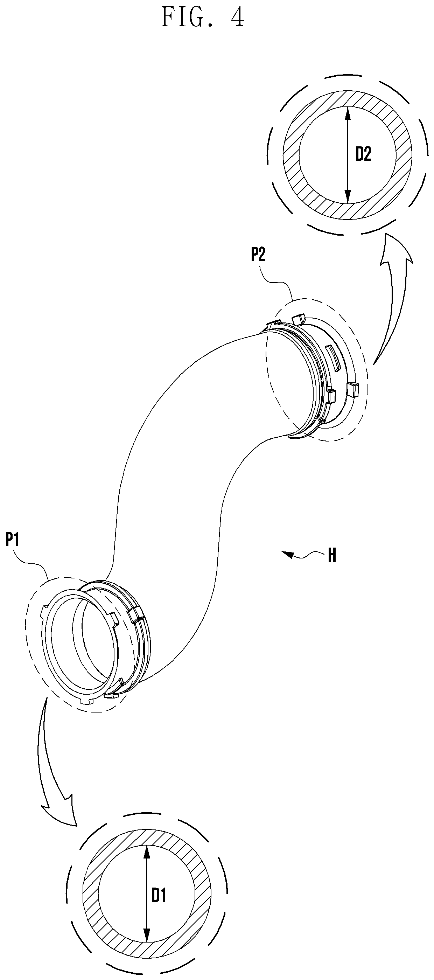

FIG. 1 is a flowchart illustrating a hose forming process according to an embodiment of this document. FIG. 2A is a perspective view illustrating a hose forming device according to an embodiment of the disclosure. FIG. 2B is an exploded perspective view illustrating a hose forming device according to an embodiment of the disclosure. FIG. 3A is a perspective view illustrating a first pipe in which a first jig is formed according to an embodiment of the disclosure. FIG. 3B is a perspective view illustrating a second pipe and third pipe in which a second jig is formed according to an embodiment of the disclosure. FIG. 4 is a diagram illustrating a hose according to an embodiment of the disclosure.

According to an embodiment of the disclosure, a hose H may be formed in various methods. In an embodiment, the hose H may be processed into a curved shape according to required usage conditions (e.g., restrictions in installation space). In an embodiment, in a state in which the hose H is inserted into a mandrel having a curved shape, the hose H may be formed by putting high-temperature steam as a heating medium into a curing device of a chamber form, called a vulcanization kiln, curing it at a high temperature and pressure, and then performing a cooling process for a predetermined time period. In some embodiments, the hose H may be formed into a required shape using a blow molding method. The blow molding method may be a method of producing a hose H of a desired shape by heating a material constituting the hose H, putting the heated material into a mold corresponding to a final shape of the hose, and injecting air. The hose H produced using the blow molding method may be cooled for a predetermined time period and then completed in a final shape. Further, the hose H may be formed in various methods.

The hose H may contract in a cooling step, and accordingly, the hose H may not be produced in a designed shape. In particular, as inner diameter sizes D1 and D2 of both ends P1 and P2 of the hose H (e.g., both ends P1 and P2 of the hose H of FIG. 2) fastened to a counterpart are not formed according to designed numerical values, assembly or fastening with the counterpart may not be secured. For example, the inner diameter size D1 of one end part P1 of the hose H and the inner diameter size D2 of the other end part P2 of the hose H may not be formed according to the designed numerical values. In order to solve such a problem, a process of processing the hose H in which cooling is completed to correspond to a size of the counterpart may be added. For example, the inner diameters D1 and D2 of one end part P1 and the other end part P2 of the hose H coupled to the counterpart may be processed based on the size of the counterpart (e.g., an object in which the hose H is assembled). In this case, an additional process of forming the hose H may be required. Therefore, a product production cost may increase. Further, during additional processing of the cooled hose H, chips, powder, and the like may be generated, which may be placed at the inner surface of the hose H to deteriorate a quality of the hose H. Further, a cleaning process for removing foreign materials placed at the inner surface of the hose H is performed, which may increase a product production cost.

In various embodiments of this document, in step of forming the hose H, a method capable of forming an inner diameter of the hose H in a designed numerical value may be presented. Accordingly, the hose H may secure assembly or fastening with a counterpart without additional processing. Hereinafter, a hose forming device 100 for processing the hose H to a pre-designed numerical value without additional processing will be described. Before describing the hose forming device of this document, the hose forming method of this document will be briefly described.

According to various embodiments of this document, as illustrated in FIG. 1, in step of forming a hose H of this document, step S1 of heating a material constituting the hose H may be performed. Thereafter, step S2 of injecting the heated material into a mold corresponding to a final shape of the hose H may be performed. Thereafter, a blow molding method S3 of forming the hose H by injecting air into the mold may be performed. When air is introduced into the mold in a state in which the heated material is injected into the mold, the material expands, and the hose H may be thus formed into the shape to be processed. Thereafter, the hose H formed to correspond to an internal shape of the mold may be separated from the mold. Thereafter, one end of the hose H in a heated state may be inserted into a first jig 113 (e.g., a first jig 113 of FIG. 3A) of the hose forming device 100, and the other end thereof may be inserted (S4) into a second jig 123 (e.g., a second jig 123 of FIG. 3B) of the hose forming device 100. As will be described later, when the first jig 113 and the second jig 123 are formed and cooled in substantially the same outer diameter as the inner diameter of the hose H to be finally processed, an inner diameter size of the hose H may be prevented from changing due to contraction of the hose H. Thereafter, by controlling (S5) moving devices 210 and 220 (e.g., moving devices 210 and 220 of FIG. 2A) disposed in at least one of a first pipe 110 (e.g., a first pipe 110 of FIG. 2A) in which the first jig 113 is formed or a second pipe 120 (e.g., a second pipe 120 of FIG. 2A) in which the second jig 123 is formed, the degree of bending of the hose H may be adjusted. For example, as the moving devices 210 and 220 move the first pipe 110 in a direction perpendicular to the second pipe 120 (e.g., the Z-axis direction of FIG. 2A), the hose H connected to the first jig 113 of the first pipe 110 and the second jig 123 of the second pipe 120 may be bent and modified. Alternatively, as the moving devices 210 and 220 move the second pipe 120 in a direction perpendicular to the first pipe 110, the hose H may be bent and modified. Thereafter, by supplying fluid to the hose H by adjusting a fluid device (not illustrated) connected to at least one of the first pipe 110 or the second pipe 120, the hose H may be cooled (S6). Thereafter, as the cooled hose H is separated from the hose forming device 100 (S7), the forming process of the hose H may be ended.

In the above description, it has been described that the hose H is produced through a blow molding method, but the disclosure is not limited thereto. The hose H may be formed through various processes that may be performed by a person skilled in the art. The hose H formed through various processes may have one end P1 and the other end P2 inserted into the first jig 113 and/or the second jig 123 in a heated state before cooling. The first jig 113 and the second jig 123 may have substantially the same outer diameters D'1 and D'2 as an inner diameter numerical value of the hose H of a final shape assembled with the counterpart. Therefore, as the hose H goes through the cooling step S6, one end part P1 and the other end part P2 of the hose H may not contract, but may be cooled to a designed numerical value through the first jig 113 and the second jig 123.

In an embodiment, the hose H may be made of plastic or rubber material. In an embodiment, a material constituting the hose H may be made of various materials such as polyethylene, vinyl chloride resin, nylon, silicone, polycarbonate, polyacetal, and ethylene propylene diene monomer rubber (EPDM). Further, the hose H may be formed using various materials that may be used by a person skilled in the art.

According to an embodiment of the disclosure, as illustrated in FIGS. 2A and 2B, the hose forming device 100 may include a first pipe 110 including a first jig 113 into which one end part P1 of the hose H is inserted, a second pipe 120 including a second jig 123 into which the other end part P2 of the hose H is inserted, and a third pipe 130 connected to a fluid supply device to supply fluid to the second pipe 120.

According to an embodiment, as illustrated in FIGS. 2A, 2B and 3A, the first pipe 110 may include a first body 111, a first conduit 112 formed inside the first body 111, and a first jig 113. In an embodiment, the first body 111 may be a body of the first pipe 110. The first conduit 112 may be formed inside the first body 111 and be extended in the same direction as an extension direction of the first body 111. In an embodiment, the first conduit 112 may be a passage through which fluid sprayed from a fluid supply device flows. The first jig 113 may be protruded from the first body 111 to be inserted into one end part P1 of the hose H. The first jig 113 may be connected to the first conduit 112 formed in the first body 111. For example, the first conduit 112 may be extended from the first body 111 in a direction in which the first jig 113 is protruded.

According to an embodiment, as illustrated in FIGS. 2A, 2B, and 3B, the second pipe 120 may include a second body 121, a second conduit 122 formed inside the second body 121, and a second jig 123. In an embodiment, the second body 121 may be a body of the second pipe 120. The second conduit 122 may be formed inside the second body 121 and be extended in the same direction as an extension direction of the second body 121. In an embodiment, the second conduit 122 may be a passage through which fluid sprayed from a fluid supply device flows. The second jig 123 may be protruded from the second body 121 to be inserted into the other end P2 of the hose H. The second jig 123 may be connected to the second conduit 122 formed in the second body 121. For example, the second conduit 122 may be extended from the second body 121 in a direction in which the second jig 123 is protruded.

In an embodiment not illustrated in the drawings, the first jig 113 and the second jig 123 may be formed separately from the first pipe 110 and the second pipe 120. The first jig 113 may have a conduit therein. The first jig 113 may be fastened to the first pipe 110 to connect the first conduit 112 formed in the first pipe 110 and a conduit formed inside the first jig 113. Likewise, the second jig 123 may have a conduit therein. The second jig 123 may be fastened to the second pipe 120 to connect the second conduit 122 formed in the second pipe 120 and a conduit formed inside the second jig 123.

In an embodiment, a fluid supply device may be connected to at least one of the first pipe 110 or the second pipe 120. The fluid supply device may supply fluid to the hose H connected to the first jig 113 and the second jig 123 through the first pipe 110 and/or the second pipe 120 to cool the hose H. In an embodiment, in the case that the fluid supply device is connected to the first pipe 110, fluid sprayed from the fluid supply device may flow in order of the first pipe 110, the hose H, and the second pipe 120. In some embodiments, in the case that the fluid supply device is connected to the second pipe 120, fluid sprayed from the fluid supply device may flow in order of the second pipe 120, the hose H, and the first pipe 110. Accordingly, the hose H may be cooled through the fluid sprayed from the fluid supply device in a state inserted into the first jig 113 and the second jig 123.

According to an embodiment, as illustrated in FIGS. 2A and 2B, the hose forming device 100 may include a third pipe 130. The third pipe 130 may include a third body 131 and a third conduit 132 formed inside the third body 131 in an extension direction of the third body 131. The third pipe 130 may be coupled to the second pipe 120 so that the third conduit 132 is connected to the second conduit 122 of the second pipe 120. The third pipe 130 may be connected to the fluid supply device to deliver fluid sprayed from the fluid supply device in order of the second pipe 120, the hose H, and the first pipe 110. In an embodiment not illustrated in the drawings, the third pipe 130 may be connected to the first pipe 110. The third pipe 130 may be connected to the fluid supply device to deliver fluid sprayed from the fluid supply device in order of the first pipe 110, the hose H, and the second pipe 120. Accordingly, the hose H may be cooled through fluid delivered from the fluid supply device connected to the third pipe 130.

In the above description, it is assumed that the third pipe 130 is a separate component from the first pipe 110 and/or the second pipe 120, but the disclosure may not be limited thereto. In an embodiment, the third pipe 130 may be formed integrally with the first pipe 110 and/or the second pipe 120.

In an embodiment, the first pipe 110, the second pipe 120, and/or the third pipe 130 may be made of a metal material having predetermined strength. The first jig 113, which is part of the first pipe 110, and the second jig 123, which is part of the second pipe 120, are made of a metal material to prevent a numerical value of an inner shape of an object (e.g., hose H) to be formed from changing.

According to an embodiment, as illustrated in FIGS. 2A and 2B, the first jig 113 of the first pipe 110 may be inserted into one end part P1 of the hose H in a heated state. With reference to FIGS. 3A and 4, a numerical value of an outer diameter D'1 of the first jig 113 may be substantially the same as that of the inner diameter D1 of one end part P1 of the hose H. For example, the outer diameter D'1 of the first jig 113 may be formed in the same numerical value as that of the inner diameter D1 of one end part P1 of the hose H of a final shape assembled with the counterpart. The inner diameter D1 of one end part P1 of the hose H of the final shape may be the same as the inner diameter of the counterpart. With reference to FIGS. 3B and 4, the second jig 123 of the second pipe 120 may be inserted into the other end part P2 of the hose H in a heated state. A numerical value of the outer diameter D'2 of the second jig 123 may be substantially the same as that of the inner diameter D2 of the other end part P2 of the hose H. For example, the outer diameter D'2 of the second jig 123 may be formed in the same numerical value as that of the inner diameter D2 of the other end part P2 of the hose H of the final shape assembled with the counterpart. The inner diameter D2 of the other end part P2 of the hose H of the final shape may be formed in the same as the inner diameter of the counterpart. In summary, the inner diameters D1 and D2 of one end part P1 and the other end part P2 of the hose H may be determined based on the size of the counterpart to be assembled. The sizes of the outer diameters D'1 and D'2 of the first jig 113 and the second jig 123 may be formed based on the outer diameter size of the counterpart.

In an embodiment, the outer diameter D'1 of the first jig 113 and the outer diameter D'2 of the second jig 123 may be determined based on the inner diameters D1 and D2 of the hose H. For example, after cooling, in the case that the inner diameters D1 and D2 of one end part P1 and the other end part P2 of the hose H should be the same, the outer diameter D'1 of the first jig 113 and the outer diameter D'2 of the second jig 123 may be substantially the same. In another embodiment, after cooling, in the case that the inner diameters D1 and D2 of one end part P1 and the other end part P2 of the hose H should be different, the outer diameter D'1 of the first jig 113 and the outer diameter D'2 of the second jig 123 may be formed in different sizes.

The hose H may be assembled to the counterpart in a state in which forming is completed after a cooling process. In an embodiment, in the case that the cooling process is performed without inserting the first jig 113 and the second jig 123 into one end part P1 and the other end part P2 of the hose H, the hose H may be contracted. In this case, the hose H may not be formed according to a designed numerical value, and fastening and/or assembly with the counterpart may not be secured. According to an embodiment of the disclosure, inner diameters D1 and D2 of one end part P1 and the other end part P2 of the hose H may be determined based on the size of the counterpart to be assembled. Sizes of the outer diameters D'1 and D'2 of the first jig 113 and the second jig 123 may be formed based on the outer diameter size of the counterpart. One end part P1 and the other end part P2 of the hose H may be inserted into the first jig 113 and the second jig 123 in a heated state before cooling of the hose H. In a state in which the hose H is inserted into the first jig 113 and the second jig 123, a cooling process may be performed. In this case, one end part P1 and the other end part P2 of the hose H may not be contracted through the first jig 113 and the second jig 123 during the cooling process. Accordingly, the inner diameters D1 and D2 of one end part P1 and the other end P2 of the hose H may be cooled according to a designed numerical value. As the inner diameters D1 and D2 of the hose H are maintained according to pre-designed numerical values, assembly or fastening with the counterpart may be secured without additional processing.

According to an embodiment, as illustrated in FIGS. 2A and 2B, the hose forming device 100 may include moving devices 210 and 220. In an embodiment, the moving devices 210 and 220 may include at least one of the first moving device 210 or the second moving device 220. In an embodiment, the first moving device 210 may be disposed in the first pipe 110. The first moving device 210 may form the hose H coupled to the first jig 113 and the second jig 123 into bending of a final shape to form by moving the first pipe 110 in one direction with respect to the second pipe 120. For example, the first pipe 110 may move in a direction perpendicular to the second pipe 120 (e.g., the Z-axis direction of FIGS. 2A and 2B) through the first moving device 210. In an embodiment, the second moving device 220 may be disposed in the second pipe 120. The second moving device 220 may form the hose H coupled to the first jig 113 and the second jig 123 into bending of a final shape to form by moving the second pipe 120 in one direction with respect to the first pipe 110. For example, the second pipe 120 may move in a direction perpendicular to the first pipe 110 (e.g., the Z-axis direction of FIGS. 2A and 2B) through the second moving device 220. In this case, in an embodiment, the hose H may be formed in an 'S' shape, as illustrated in FIG. 4. Accordingly, the hose H may be formed into a curved shape through the first moving device 210 and/or the second moving device 220.

A hose forming device 100 for forming a heated hose H of the disclosure may include a first pipe 110 including a first body 111, a first conduit 112 formed inside the first body and extended in the same direction as an extension direction of the first body, and a first jig 113 connected to the first conduit and protruded from the first body to be inserted into one end part P1 of the hose, a second pipe 120 including a second body 121, a second conduit 122 formed inside the second body and extended in the same direction as an extension direction of the second body, and a second jig 123 connected to the second conduit and protruded from the second body to be inserted into the other end part P2 of the hose, and a fluid supply device connected to at least one of the first conduit of the first pipe or the second conduit of the second pipe to supply fluid to the hose.

Further, an outer diameter D'1 of the first jig and an outer diameter D'2 of the second jig may be formed in the same size.

Further, an outer diameter D'1 of the first jig and an outer diameter D'2 of the second jig may be formed in different sizes.

Further, the hose forming device 100 may further include at least one of a first moving device 210 in which the first pipe is disposed to move the first pipe with respect to the second pipe or a second moving device 220 in which the second pipe is disposed to move the second pipe with respect to the first pipe.

Further, the hose may be formed by a blow molding method.

A method of forming a hose according to an embodiment of the disclosure may include step S1 of heating a material, step S2 of forming a hose H by injecting the heated material into a mold, step S4 of inserting one end part P1 of the heated hose into a first jig 113 connected to a first conduit 112 formed inside the first body 111 and inserting the other end part P2 of the heated hose into a second jig 123 connected to a second conduit 122 formed inside the second body 121, step S5 of relatively moving the first body with respect to the second body through moving devices 210 and 220 disposed in at least one of the first body or the second body, step S6 of cooling the hose by controlling a fluid supply device connected to at least one of the first conduit or the second conduit, and step S7 of separating the hose from the first jig and the second jig.

Further, an outer diameter D'1 of the first jig and an outer diameter D'2 of the second jig may be formed in the same size.

Further, an outer diameter D'1 of the first jig and an outer diameter D'2 of the second jig may be formed in different sizes.

Further, the moving device may include a first moving device 210 disposed in the first body to move the first body with respect to the second body, and a second moving device 220 disposed in the second body to move the second body with respect to the first body.

Further, the hose may be formed by a blow molding method of injecting air in a state in which a heated material is injected into a mold.

Various embodiments of this document can provide a method capable of forming a hose in designed numerical values. Accordingly, the hose can secure assembly or fastening with a counterpart.

### [Description of symbols]

| | | | |
|---|---|---|---|
| 100: | hose forming device | 110: | first pipe |
| 120: | second pipe | 130: | third pipe |
| 210: | first moving device | 220: | second moving device |

## Claims

1. A hose forming device (100) for forming a heated hose (H), the hose (H) forming device (100) comprising:
a first pipe (110) including a first body (111), a first conduit (112) formed inside the first body (111) and extended in the same direction as an extension direction of the first body (111), and a first jig (113) connected to the first conduit (112) and protruded from the first body (111) to be inserted into a one end part of the hose (H);
a second pipe (120) including a second body (121), a second conduit (122) formed inside the second body (121) and extended in the same direction as an extension direction of the second body (121), and a second jig (123) connected to the second conduit (122) and protruded from the second body (121) to be inserted into the other end part of the hose (H);
a fluid supply device connected to at least one of the first conduit (112) of the first pipe (110) or the second conduit (122) of the second pipe (120) to supply fluid to the hose (H),
a first moving device (210) in which the first pipe (110) is disposed to move the first pipe (110) with respect to the second pipe (120); and
a second moving device (220) in which the second pipe (120) is disposed to move the second pipe (120) with respect to the first pipe (110).
wherein an outer diameter (D'1) of the first jig (113) is the same as an inner diameter (D1) of one end of the hose (H),
wherein an outer diameter (D'2) of the second jig (123) is the same as an inner diameter (D2) of the other end of the hose (H), and
wherein the hose (H) is formed by a blow molding method of injecting air in a state in which a heated material is injected into a mold.

2. The hose forming device (100) of claim 1, wherein the outer diameter (D'1) of the first jig (113) and the outer diameter (D'2) of the second jig (123) are formed in the same size.

3. The hose forming device (100) of claim 1, wherein the outer diameter (D'1) of the first jig (113) and the outer diameter (D'2)_of the second jig (123) are formed in different sizes.

4. A method of forming a hose (H), the method comprising:
heating a material;
forming a hose (H) by injecting a heated material into a mold;
inserting one end part of the heated hose (H) into a first jig (113) formed inside a first body (111) and connected to a first conduit (112) through which fluid flows, and inserting the other end part of the heated hose (H) into a second jig (123) formed inside a second body (121) and connected to a second conduit (122) through which fluid flows;
relatively moving the first body (111) with respect to the second body (121) through a moving device (210, 220) disposed in at least one of the first body (111) or the second body (121);
cooling the hose (H) by controlling a fluid supply device connected to at least one of the first conduit (112) or the second conduit; and
separating the hose (H) from the first jig (113) and the second jig (123),
wherein an outer diameter (D'1) of the first jig (113) is the same as an inner diameter (D1) of one end of the hose (H),
wherein an outer diameter (D'2) of the second jig (123) is the same as an inner diameter (D2) of the other end of the hose (H), and
wherein the hose (H) is formed by a blow molding method of injecting air in a state in which a heated material is injected into a mold.

5. The method of claim 4, wherein the outer diameter (D'1) of the first jig (113) and the outer diameter (D'2) of the second jig (123) are formed in the same size.

6. The method of claim 4, wherein the outer diameter (D'1) of the first jig (113) and the outer diameter (D'2) of the second jig (123) are formed in different sizes.

7. The method of claim 4, wherein the moving device comprises a first moving device (210) disposed in the first body (111) to move the first body (111) with respect to the second body (121), and a second moving device (220) disposed in the second body (121) to move the second body (121) with respect to the first body (111).

## Patentansprüche

1. Schlauchformungsvorrichtung (100) zum Formen eines beheizten Schlauchs (H), wobei die Schlauchformungsvorrichtung (H) (100) umfasst: ein erstes Rohr (110), das einen ersten Körper (111), eine erste Leitung (112), die innerhalb des ersten Körpers (111) ausgebildet ist und sich in der gleichen Richtung wie eine Erstreckungsrichtung des ersten Körpers (111) erstreckt, und eine erste Vorrichtung (113) umfasst, die mit der ersten Leitung (112) verbunden ist und von dem ersten Körper (111) vorsteht, um in einen Endteil des Schlauchs (H) eingeführt zu werden; ein zweites Rohr (120), das einen zweiten Körper (121), eine zweite Leitung (122), die innerhalb des zweiten Körpers (121) ausgebildet ist und sich in der gleichen Richtung wie eine Erstreckungsrichtung des zweiten Körpers (121) erstreckt, und eine zweite Vorrichtung (123) umfasst, die mit der zweiten Leitung (122) verbunden ist und aus dem zweiten Körper (121) herausragt, um in den anderen Endteil des Schlauchs (H) eingeführt zu werden; eine Flüssigkeitszufuhrvorrichtung, die mit mindestens einer der ersten Leitung (112) des ersten Rohrs (110) oder der zweiten Leitung (122) des zweiten Rohrs (120) verbunden ist, um dem Schlauch (H) Flüssigkeit zuzuführen, eine erste Bewegungsvorrichtung (210), in der das erste Rohr (110) angeordnet ist, um das erste Rohr (110) in Bezug auf das zweite Rohr (120) zu bewegen; und eine zweite Bewegungsvorrichtung (220), in der das zweite Rohr (120) angeordnet ist, um das zweite Rohr (120) in Bezug auf das erste Rohr (110) zu bewegen. Wobei ein Außendurchmesser (D'1) der ersten Vorrichtung (113) gleich einem Innendurchmesser (D1) eines Endes des Schlauches (H) ist, wobei ein Außendurchmesser (D'2) der zweiten Vorrichtung (123) derselbe ist wie ein Innendurchmesser (D2) des anderen Endes des Schlauchs (H), und wobei der Schlauch (H) durch ein Blasformverfahren des Einblasens von Luft in einem Zustand gebildet wird, in dem ein erhitztes Material in eine Form eingespritzt wird.

2. Schlauchformungsvorrichtung (100) nach Anspruch 1, wobei der Außendurchmesser (D'1) der ersten Vorrichtung (113) und der Außendurchmesser (D'2) der zweiten Vorrichtung (123) in der gleichen Größe ausgebildet sind.

3. Schlauchformungsvorrichtung (100) nach Anspruch 1, wobei der Außendurchmesser (D'1) der ersten Vorrichtung (113) und der Außendurchmesser (D'2)_ der zweiten Vorrichtung (123) in unterschiedlichen Größen ausgebildet sind.

4. Verfahren zum Formen eines Schlauches (H), wobei das Verfahren umfasst: Erhitzen eines Materials; Formung eines Schlauches (H) durch Einspritzen eines erhitzten Materials in eine Form; Einsetzen eines Endteils des beheizten Schlauchs (H) in eine erste Vorrichtung (113), die im Inneren eines ersten Körpers (111) ausgebildet und mit einer ersten Leitung (112) verbunden ist, durch die Fluid fließt, und Einsetzen des anderen Endteils des beheizten Schlauchs (H) in eine zweite Vorrichtung (123), die im Inneren eines zweiten Körpers (121) ausgebildet und mit einer zweiten Leitung (122) verbunden ist, durch die Fluid fließt; relatives Bewegen des ersten Körpers (111) in Bezug auf den zweiten Körper (121) durch eine Bewegungsvorrichtung (210, 220), die in mindestens einem von dem ersten Körper (111) oder dem zweiten Körper (121) angeordnet ist; Kühlen des Schlauchs (H) durch Steuern einer Flüssigkeitszufuhrvorrichtung, die mit mindestens einer der ersten Leitung (112) oder der zweiten Leitung verbunden ist; und Trennen des Schlauches (H) von der ersten Vorrichtung (113) und der zweiten Vorrichtung (123), wobei ein Außendurchmesser (D'1) der ersten Vorrichtung (113) gleich einem Innendurchmesser (D1) eines Endes des Schlauches (H) ist, wobei ein Außendurchmesser (D'2) der zweiten Vorrichtung (123) derselbe ist wie ein Innendurchmesser (D2) des anderen Endes des Schlauchs (H), und wobei der Schlauch (H) durch ein Blasformverfahren des Einblasens von Luft in einem Zustand gebildet wird, in dem ein erhitztes Material in eine Form eingespritzt wird.

5. Verfahren nach Anspruch 4, bei dem der Außendurchmesser (D'1) der ersten Lehre (113) und der Außendurchmesser (D'2) der zweiten Lehre (123) in der gleichen Größe ausgebildet sind.

6. Verfahren nach Anspruch 4, wobei der Außendurchmesser (D'1) der ersten Lehre (113) und der Außendurchmesser (D'2) der zweiten Lehre (123) in unterschiedlichen Größen ausgebildet sind.

7. Verfahren nach Anspruch 4, wobei die Bewegungsvorrichtung eine erste Bewegungsvorrichtung (210) umfasst, die in dem ersten Körper (111) angeordnet ist, um den ersten Körper (111) in Bezug auf den zweiten Körper (121) zu bewegen, und eine zweite Bewegungsvorrichtung (220), die in dem zweiten Körper (121) angeordnet ist, um den zweiten Körper (121) in Bezug auf den ersten Körper (111) zu bewegen.

## Revendications

1. Dispositif de formation de tuyau (100) pour former un tuyau chauffé (H), le dispositif de formation de tuyau (H) (100) comprenant: un premier tuyau (110) comprenant un premier corps (111), un premier conduit (112) formé à l'intérieur du premier corps (111) et étendu dans la même direction qu'une direction d'extension du premier corps (111), et un premier gabarit (113) connecté au premier conduit (112) et faisant saillie du premier corps (111) pour être inséré dans une partie d'extrémité du tuyau (H); un deuxième tuyau (120) comprenant un deuxième corps (121), un deuxième conduit (122) formé à l'intérieur du deuxième corps (121) et étendu dans la même direction que la direction d'extension du deuxième corps (121), et un deuxième gabarit (123) connecté au deuxième conduit (122) et faisant saillie du deuxième corps (121) pour être inséré dans l'autre partie terminale du tuyau (H); un dispositif d'alimentation en fluide connecté à au moins l'un des premiers conduits (112) du premier tuyau (110) ou au second conduit (122) du second tuyau (120) pour alimenter le tuyau (H) en fluide, un premier dispositif de déplacement (210) dans lequel le premier tuyau (110) est disposé pour déplacer le premier tuyau (110) par rapport au second tuyau (120); et un second dispositif de déplacement (220) dans lequel le second tuyau (120) est disposé pour déplacer le second tuyau (120) par rapport au premier tuyau (110). Dans lequel le diamètre extérieur (D'1) du premier gabarit (113) est identique au diamètre intérieur (D1) d'une extrémité du tuyau (H), dans lequel un diamètre extérieur (D'2) du second gabarit (123) est identique à un diamètre intérieur (D2) de l'autre extrémité du tuyau (H), et dans lequel le tuyau (H) est formé par une méthode de moulage par soufflage consistant à injecter de l'air dans un état dans lequel un matériau chauffé est injecté dans un moule.

2. Dispositif de formation de tuyau (100) de la revendication 1, dans lequel le diamètre extérieur (D'1) du premier gabarit (113) et le diamètre extérieur (D'2) du second gabarit (123) sont formés dans la même taille.

3. Dispositif de formation de tuyau (100) de la revendication 1, dans lequel le diamètre extérieur (D'1) du premier gabarit (113) et le diamètre extérieur (D'2)_du second gabarit (123) sont formés dans des tailles différentes.

4. Méthode de formation d'un tuyau (H), consistant à: chauffer un matériau; former un tuyau (H) en injectant un matériau chauffé dans un moule; insérer une extrémité du tuyau chauffé (H) dans un premier gabarit (113) formé à l'intérieur d'un premier corps (111) et connecté à un premier conduit (112) à travers lequel le fluide circule, et en insérant l'autre extrémité du tuyau chauffé (H) dans un second gabarit (123) formé à l'intérieur d'un second corps (121) et connecté à un second conduit (122) à travers lequel le fluide circule; déplacer relativement le premier corps (111) par rapport au second corps (121) au moyen d'un dispositif de déplacement (210, 220) disposé dans au moins l'un des deux corps (111) ou le second corps (121); refroidir le tuyau (H) en contrôlant un dispositif d'alimentation en fluide connecté à au moins l'un du premier conduit (112) ou du second conduit; et séparer le tuyau (H) du premier gabarit (113) et du second gabarit (123), dans lequel le diamètre extérieur (D'1) du premier gabarit (113) est identique au diamètre intérieur (D1) d'une extrémité du tuyau (H), dans lequel un diamètre extérieur (D'2) du second gabarit (123) est identique à un diamètre intérieur (D2) de l'autre extrémité du tuyau (H), et dans lequel le tuyau (H) est formé par une méthode de moulage par soufflage consistant à injecter de l'air dans un état dans lequel un matériau chauffé est injecté dans un moule.

5. Méthode de la revendication 4, dans laquelle le diamètre extérieur (D'1) du premier gabarit (113) et le diamètre extérieur (D'2) du second gabarit (123) sont de la même taille.

6. Méthode de la revendication 4, dans laquelle le diamètre extérieur (D'1) du premier gabarit (113) et le diamètre extérieur (D'2) du second gabarit (123) sont formés dans des tailles différentes.

7. Méthode de la revendication 4, dans laquelle le dispositif de déplacement comprend un premier dispositif de déplacement (210) disposé dans le premier corps (111) pour déplacer le premier corps (111) par rapport au deuxième corps (121), et un deuxième dispositif de déplacement (220) disposé dans le deuxième corps (121) pour déplacer le deuxième corps (121) par rapport au premier corps (111).
